Europäisches Patentamt

European Patent Office

Office européen des brevets

(11) Publication number: **0 103 495**
**B1**

(12) **EUROPEAN PATENT SPECIFICATION**

(45) Date of publication of patent specification: **11.01.89**

(21) Application number: **83401006.8**

(22) Date of filing: **20.05.83**

(51) Int. Cl.⁴: **H 01 G 1/14**

(54) **A terminal for a capacitor and method of forming same.**

(30) Priority: **21.06.82 US 390165**

(43) Date of publication of application:
**21.03.84 Bulletin 84/12**

(45) Publication of the grant of the patent:
**11.01.89 Bulletin 89/02**

(84) Designated Contracting States:
**DE FR GB IT**

(56) References cited:
**DE-C- 555 420**
**GB-A- 713 058**
**US-A-1 248 829**
**US-A-2 908 886**
**US-A-3 060 356**

(73) Proprietor: **ALLIED-SIGNAL INC.**
**Columbia Road and Park Avenue P.O. Box 2245R**
**Morristown New Jersey 07960 (US)**

(72) Inventor: **Fitzgerald, Cecil Wesley**
**27 Bridge Street**
**Sidney, N.Y. 13838 (US)**

(74) Representative: **Brock, Peter William**
**ALLIED-SIGNAL INC. Law Department 48**
**Leicester Square**
**London WC2H 7LW (GB)**

Courier Press, Leamington Spa, England.

## Description

This invention relates to capacitors, and more particularly to the terminal which extends from one end of the capacitor.

Some capacitors are manufactured from a metal foil and a dielectric material, wound in a circular or rectangular shape to form a capacitor of a given capacitance. Such a capacitor may be found in US—A—1900352 issued July 13, 1929 and entitled "Condenser and Method of Making Same". The conducting foil used in such capacitors is usually extremely thin and fragile, and a metal strip of electrically conductive material is generally attached to each end of the foil as terminals, which may then be connected into an electrical circuit.

When an electrical cnductor is connected to the terminal members, it is customary to solder such terminals to the conductor. If the conductor moves, it also moves one end of the terminal, which may move the other end of the terminal and cause the terminal to tear away from the foil to which it was attached. One example of a capacitor terminal may be found in US—A—1248829 issued December 4, 1917 and entitled "Condenser Terminal and Method of Forming Same". Another example of a capacitor terminal is found in US—A—3060356 in which a terminal strip attached to a foil layer of a tubular capacitor is folded through a first 180 degree bend; a second 180 degree bend in the reverse direction from the first bend and through a 90 degree bend so as to extend the strip axially from the capacitor.

According to a first embodiment of the invention there is provided a terminal for a capacitor of the type having a plurality of layers of metal foil and insulation wound to form a capacitor, said terminal comprising an electrically conductive strip projecting beyond a lateral edge of the wound layers of foil and insulation, said terminal having:

a first fold in said strip in the direction of one edge of said capacitor;

a second fold in said strip in the direction of another edge opposite to said one edge of said capacitor; and a third fold in said strip. In accordance with the invention, said third fold is at an oblique angle to an edge of said strip so as to extend said strip substantially in the plane of said second fold in a direction transverse to the directions of said first and second folds, whereby one end of the strip is laterally spaced from said folds.

According to a second embodiment of the invention there is provided a method of forming a capacitor terminal from one end of an electrically conductive strip, connected to one of the layers of metal foil of a capacitor formed of a plurality of layers of metal foil and intervening insulation, comprising the steps:

firstly, folding the strip in a direction of one of the outside surfaces of said capacitor; and

secondly, folding the strip in a direction opposite to the direction of said first fold.

Thirdly, in accordance with the invention, the strip is folded at an oblique angle to an edge of said strip, so that one end of said strip extends tranversely to the directions of said first and second folds, and is laterally spaced from said folds.

This invention provides a terminal, one end of which will not tear away from the foil to which it is attached when the other end is moved a small distance. It also allows a conductor to be soldered to the terminal without allowing the solder to flow into the folds, which would prevent the folds from allowing movement of a portion of the terminal.

Accordingly, it is advantage of this invention to provide a terminal, one end of which may be moved a small distance in a direction parallel or perpendicular to the central axis of a capacitor without causing strain on or movement of the other end of the terminal.

Another advantage of the invention is that it allows visual inspection of the solder joints between the tabs of several capacitors and a conductor that connects the tabs together.

Figures 1, 2 and 3 illustrates how the capacitor tab is folded.

Figure 4 illustrates the capacitor tabs soldered to a conductor.

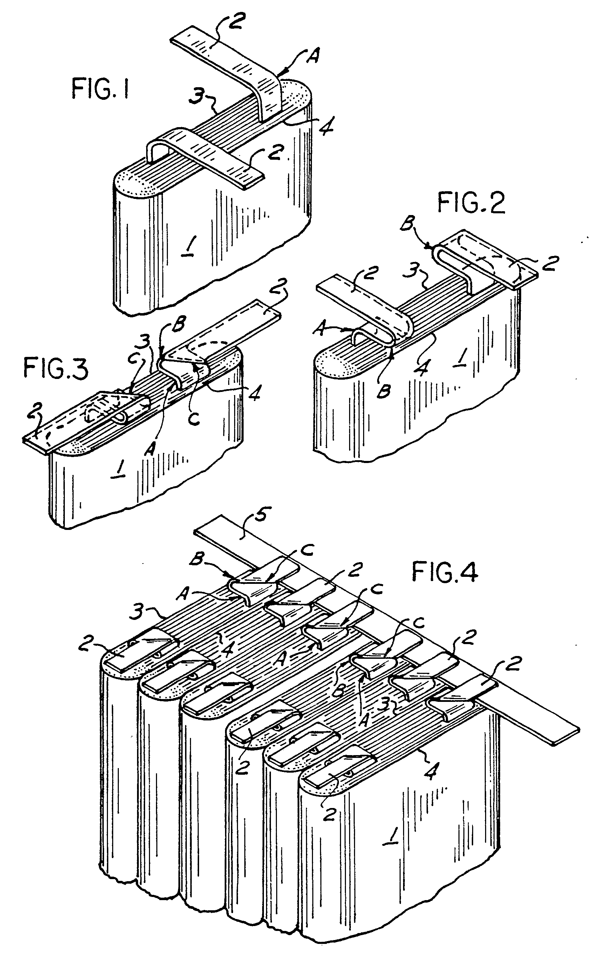

Referring now to the drawings, Figure 1 illustrates a capacitor 1 of the type comprised of a plurality of layers of foil and insulation wound to form a capacitor having terminals provided by strips 2 that project beyond a lateral edge of the foil and insulation. Each strip 2 has a fold A, which is a 90 degree bend, so that the strip 2 extends in a direction past one edge 3 of the capacitor 1.

Figure 2 illustrates a second fold B, which is a 180 degree bend, so that the strip 2 extends in a direction past another edge 4 of said capacitor 1, opposite edge 3.

Figure 3 illustrates a third fold C which is at an oblique angle (preferably 45 degrees) to a lateral edge of the strip 2.

Figures 1, 2 and 3 illustrate a method of forming a terminal from one end of an electrically conductive strip 2 connected to the foil of a capacitor 1. The method includes making a first fold A (90 degrees) in the strip 2 in a direction of one of the edges 3 of the capacitor; making a second fold B (180 degrees) in the strip 2 in a direction of another portion of the edges 4 of the capacitor; and making a third fold C (45 degrees) in the terminal at an oblique angle to the lateral edges of the strip, so that one end of the terminal formed by the strip 2 is laterally spaced from said folds.

Figure 4 illustrates how an electrical conductor 5 is attached to one end of each of the strips 2 along one side of the capacitors 1. Another metal conductor may be attached to the ends of the other strip 2. Because of the oblique fold C in the strip 2, the end of each terminal (strip) 2 may be soldered to the conductor 5 at a position that is not above the folds A or B. This prevents solder from flowing down onto the folds, which would prevent the folds A or B from expanding when the conductor 5 is moved a small distance. The folds A and B in each strip permit some movement of the end of the terminal before placing a strain on the connection between the other end of the terminal and the thin foil of the capacitor 1.

While a preferred embodiment of this invention has been disclosed, it will be apparent to those skilled in the art, that changes may be made to the invention as set forth in the appended claims. For instance, there may be more than two folds in the strip to provide strain-relief, so long as there is also a fold at an oblique angle to the lateral edge of the strip forming the terminal.

## Claims

1. A terminal for a capacitor of the type having a plurality of layers of metal foil and insulation wound to form a capacitor (1), said terminal comprising an electrically conductive strip (2) projecting beyond a lateral edge of the wound layers of foil and insulation, said terminal having:

a first fold (A) in said strip (2) in the direction of one edge (3) of said capacitor (1);

a second fold (B) in said strip (2) in the direction of another edge (4) opposite to said one edge (3) of said capacitor (1); and

a third fold (C) in said strip, characterized in that said third fold is at an oblique angle to an edge of said strip (2) so as to extend said strip substantially in the plane of said second fold in a direction transverse to the directions of said first and second folds, whereby one end of the strip (2) is laterally spaced from said folds (A, B, C).

2. A terminal according to Claim 1 characterized in that the first fold (A) is a 90 degree bend, the second fold (B) is a 180 degree bend, and the third fold (C) is a bend along a line extending diagonally accoss said strip.

3. A method of forming a capacitor terminal from one end of an electrically conductive strip (2), connected to one of the layers of metal foil of a capacitor (1) formed of a plurality of layers of metal foil and intervening insulation, comprising the steps:

firstly, folding (A) the strip (2) in a direction of one of the outside surfaces of said capacitor; and

secondly, folding (B) the strip (2) in a direction opposite to the direction of said first fold; characterized by

thirdly, folding (C) the strip at an oblique angle to an edge of said strip (2), so that one end of said strip (2) extends transversely to the directions of said first and second folds and is laterally spaced from said folds (A, B, C).

4. A method according to Claim 5 characterized in that the first fold (A) is a 90 degree bend, the second fold (B) is a 180 degree bend, and the third fold (C) is a bend along a line extending at 45 degrees to a lateral edge of said strip so that the portion of said strip extending beyond said third fold lies substantially in the planes of said first and second folds.

5. A method according to Claim 3 or 4 characterized in that a conductor (5) is soldered to the underside of the end of said strip (2).

## Patentansprüche

1. Anschlußelement für einen Kondensator des Typs mit mehreren Metallfolien- und Isolierungsschichten, die zur Bildung eines Kondensators (1) gewickelt sind, wobei das Anschlußelement einen elektrisch leitenden Streifen (2) aufweist, der über eine Seitenkante der gewickelten Folien- und Isolierungsschichten vorsteht, sowie einen ersten Knick (A) im Streifen (2) in Richtung der einen Kante (3) des Kondensators (1), einen zweiten Knick (B) im Streifen (2) in Richtung der anderen Kante (4) gegenüber der einen Kante (3) des Kondensators (1) und einen dritten Knick (C) im Streifen, dadurch gekennzeichnet, daß der dritte Knick derart schiefwicklig zu einer Kante des Streifens (2) verläuft, daß sich der Streifen im wesentlichen in der Ebene des zweiten Knicks in einer Richtung quer zu den Richtungen des ersten und zweiten Knicks erstreckt, so daß ein Ende des Streifens (2) gegenüber den Knicken (A, B, C) seitlich versetzt ist.

2. Anschlußelement nach Anspruch 1, dadurch gekennzeichnet, daß der erste Knick (A) eine 90°-Biegung, der zweite Knick (B) eine 180°-Biegung und der dritte Knick (C) eine Biegung längs einer sich diagonal über den Streifen erstreckenden Linie ist.

3. Verfahren zur Herstellung eines Kondensatoranschlußelements aus einem Ende eines elektrisch leitenden Streifens (2), der an eine der Metallfolienschichten eines Kondensators (1) angeschlossen ist, der aus mehreren Metallfolienschichten und einer Zwischenisolierung gebildet ist, bestehend aus den folgenden Schritten: erstens, Knicken (A) des Streifens (2) in einer Richtung einer der Außenseitenflächen des Kondensators, und zweitens, Knicken (B) des Streifens (2) in einer Richtung entgegengesetzt zur Richtung des ersten Knicks, gekennzeichnet, durch drittens, Knicken (C) des Streifens unter einem Schrägwinkel zu einer Kante des Streifens (2), so daß sich ein Ende des Streifens (2) quer zu den Richtungen des ersten und zweiten Knicks erstrekt und seitlich zu den Knicken (A, B, C) versetzt ist.

4. Verfahren nach Anspruch 5, dadurch gekennzeichnet, daß der erste Knick (A) eine 90°-Biegung, der zweite Knick (B) eine 180°-Biegung und der dritte Knick (C) eine Beigung längs einer sich unter 45° zu einer Seitenkante des Streifens erstreckenden Linie ist, so daß der Teil des Streifens, der sich über den dritten Knick hinaus erstreckt, im wesentlichen in den Ebenen des ersten und zweiten Knicks liegt.

5. Verfahren nach Anspruch 3 oder 4, dadurch gekennzeichnet, daß ein Leiter (5) an der Unterseite des Endes des Streifens (2) angelötet ist.

## Revendications

1. Borne pour condensateur du type comportant une multitude de couches de clinquant métallique et d'isolant enroulées pour former un condensateur (1), la borne comprenant une bande conductrice de l'électricité (2) en saillie au-delà d'un bord latéral des couches bobinées de clinquant et d'isolant, la borne ayant:

un premier pli (A) dans la bande (2) dans la direction d'un bord (3) du condensateur (1);

un second pli (B) dans la bande (2) dans la direction de l'autre bord (4) opposé au premier bord (3) du condensateur (1); et

un troisième pli (C) dans la bande, caractérisé en ce que le troisième pli forme un angle oblique avec un bord de la bande (2) de manière à étendre la bande sensiblement dans le plan du second pli dans une direction transversale aux directions des premier et second plis, d'où il résulte qu'une extrémité de la bande (2) est espacée latéralement des plis (A, B, C).

2. Borne selon la revendication 1, caractérisée en ce que le premier pli (A) est cambré à 90 degrés, le second pli (B) est cambré à 180 degrés et le troisième pli (C) est cambré suivant une ligne s'étendant diagonalement par rapport à la bande.

3. Procédé de formation d'une borne de condensateur à partir d'une extrémité d'une bande conductrice de l'électricité (2), connectée à l'une des couches d'un clinquant métallique pour un condensateur (1) constitué d'une multitude de couches de clinquant métallique et d'isolant intermédiaire, comprenant les étapes consistant à:

tout d'abord, plier (A) la bande (2) dans la direction de l'une des surfaces extérieures du condensateur; et

en second lieu, plier (B) la bande (2) dans la direction opposée à celle du premier pli, caractérisé par l'étape consistant à:

en troisième lieu, plier (C) la bande suivant un angle oblique par rapport à un bord de la bande (2) de sorte qu'une extrémité de la bande (2) s'étend transversalement aux directions des premier et second plis et est latéralement espacée des plis (A, B, C).

4. Procédé selon la revendication 5, caractérisé en ce que le premier pli (A) est cambré à 90 degrés, le second pli (B) est cambré à 180 degrés, et le troisième pli (C) est cambré suivant une ligne s'étendant à 45 degrés par rapport à un bord latéral de la bande de sorte que la partie de la bande s'étendant au-delà du troisième pli est située sensiblement dans les plans des premier et second plis.

5. Procédé selon la revendication 3 ou la revendication 4, caractérisé en ce qu'un conducteur (5) est soudé au côté inférieure de l'extrémité de la bande (2).

EP 0 103 495 B1

FIG. I

FIG.2

FIG.3

FIG.4

1